# EUROPÄISCHE PATENTSCHRIFT

(11) **EP 1 995 503 B1**
(45) Veröffentlichungstag und Bekanntmachung des Hinweises auf die Patenterteilung: **18.11.2015**
(21) Anmeldenummer: 08008543.4
(22) Anmeldetag: 07.05.2008
(51) Int. Cl.: F16K 39/02, E03D 1/34

(54) **Ventildichtungsanordnung**
Valve seal assembly
Agencement d'étanchéification de soupape

(30) Priorität: 23.05.2007 DE 102007024295
(43) Veröffentlichungstag der Anmeldung: 26.11.2008
(73) Patentinhaber: GROHEDAL Sanitärsysteme GmbH, 32457 Porta Westfalica (DE)
(72) Erfinder: Korte, Hermann, 32545 Bad Oeynhausen (DE)
(74) Vertreter: Ziegler, Thomas

(56) Entgegenhaltungen:
- EP-B1- 0 915 278

## Beschreibung

Die Erfindung betrifft eine Ventildichtungsanordnung, insbesondere für ein Spülkastenablaufventi! oder ein Selbstschlussventil gemäß dem Oberbegriff des Anspruchs 1.
Derartige Ventildichtungsanordnungen sind bekannt. Hierbei hat sich insbesondere bei Spülkastenablaufventilen gezeigt, dass die auf der Ringfläche des Ventilverschlussglieds wirkende Wassermenge einen unerwünscht hohen Krafteinsatz bei der Öffnung des Ablaufventils erfordert.

Beispielsweise aus der EP 0 915 278 B1 ist eine Ventildichtungsanordnung mit zusätzlichen Überströmkanälen im Ventilverschlussglied bekannt, die eine Entlastung des Ventilverschlussglieds nach einem Ersten Anheben des Ventilverschlussglieds bewirkt.

Der Erfindung liegt die Aufgabe zugrunde, eine gattungsgemäße Ventildichtungsanordnung zu schaffen, deren Betätigung nur einen geringen Kraftaufwand erfordert und das gleichzeitig einen einfachen Aufbau und große Betriebssicherheit aufweist.

Diese Aufgabe wird erfindungsgemäß dadurch gelöst, dass bei einer Ventildichtungsanordnung für ein Spülkastenablaufventil mit einem Verschlussglied, das eine obere Scheibe, eine untere Scheibe und einen Ringfortsatz aufweist und an dem radial vorstehend ein ringförmiges Dichtelement zwischen der oberen und der unteren Scheibe gehalten ist, wobei das ringförmige Dichtelement in der Absperrposition des Ventils zur Anlage an eine ringförmige Dichtkante eines Ablaufrohrs gelangt und an der unteren Scheibe ein auskragendes Element vorgesehen ist, das beim ersten Anheben des Ventilverschlussglieds um eine Höhe H1 das ringförmige Dichtelement derart verformt, dass zwischen Dichtelement und Dichtkante wenigstens ein Kanal freigegeben wird, dessen Gesamtströmungsquerschnitt größer als der Gesamtströmungsquerschnitt eines stromabwärts hinter dem Dichtelement zwischen der Innenwand des Ablaufrohrs und dem Ringfortsatz des Ventilverschlussglieds entstehenden Ringspalts ausgebildet ist. Dadurch steht auch in dem Druckausgleichsraum unterhalb des Dichtelements ein hydrostatischer Wasserdruck an, so dass sich die auf das Dichtelement wirkenden Kräfte aufheben.

Weitere Ausgestaltungen der Erfindung sind Gegenstand der Unteransprüche. Dass unterhalb ein Druckausgleichsraum entstehen kann, wird dadurch bewirkt, dass der Gesamtströmungsquerschnitt des zwischen Dichtelement und Dichtkante freigegebenen Kanals größer als der Gesamtströmungsquerschnitt eines stromabwärts hinter dem Dichtelement entstehenden Ringspalts ausgebildet ist.

Vorteilhafterweise ist dabei das Verschlussglied an einem Überlaufrohr eines Spülkastenablaufventils ausgebildet und der Ringspalt in einer Auslassöffnung zwischen einem Ringfortsatz des Verschlussglieds und einer inneren Wand eines Ablaufrohres gebildet.

Eine weitere Ausgestaltung der Erfindung sieht vor, dass die obere und untere Scheibe, zwischen denen das Dichtelement gelagert ist, einstückig an das Verschlussglied angeformt sind. Das Dichtelement ist hierbei in einer Nut zwischen den beiden Scheiben, die auch eine Wulstform haben können gehalten. Die untere Scheibe kann hierbei einen oder mehrere kreissegmentförmige, auskragende Elemente aufweisen, die jeweils dazu geeignet sind, das ringförmige Dichtelement beim Anheben lokal zu verformen ohne dass dieses insgesamt schon von der Dichtkante abgehoben wird.

Hierbei ist es von Vorteil, wenn das Dichtelement aus einem ElastomerMaterial mit einer Härte von 20 bis 45 Shore, vorzugsweise 40 Shore vorgesehen ist.

Besonders geeignet sind hierbei Dichtelemente aus Silikon mit den angegebenen Härtegraden.

Ausführungsbeispiele der Erfindung sind in der Zeichnung dargestellt und werden im Folgenden näher beschrieben. Es zeigt
- Fig. 1: ein teilweise dargestelltes Spülkastenablaufventil im Längsschnitt, wobei das Ventil in Absperrstellung dargestellt ist;
- Fig. 2: ein teilweise dargestelltes Spülkastenventil im Längsschnitt, wobei dieses zu Beginn der Öffnungsstellung dargestellt ist.
- Fig. 3: ein Schnitt durch das Ventilverschlussglied entlang der Schnittlinie 3-3.

Der Einfachheit halber sind bei den Ausführungsbeispielen in der Zeichnung gleiche oder entsprechende Elemente mit jeweils gleichen Bezugszeichen versehen.

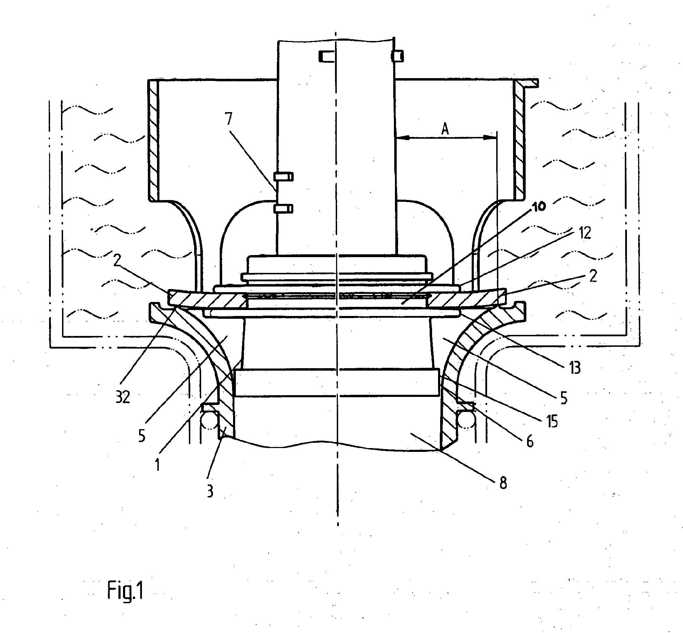

Bei dem in Fig. 1 gezeigten Spülkastenablaufventil ist im unteren Bereich des Spülkastens (mit Strichpunktlinien angedeutet) an einem sich trichterförmig verjüngenden Ablaufrohr 3 eine dreiecksförmige umlaufende Dichtkante 32 vorgesehen, an der ein als Flachring ausgebildetes Dichtelement 2 aus einem Elastomer in der Schließstellung anliegt. Das Dichtelement 2 ist hierbei an seiner Rückseite in einem Ventilverschlussglied 1, das an einem Überlaufrohr 7 angeformt ist, eingespannt.

Dazu ist in dem Ventilverschlussglied 1 ist eine umlaufende Ringnut 10 aus einer oberen 12 und einer unteren Scheibe 13 ausgebildet, von der das ringförmige Dichtelement aufgenommen ist.
Am stromabwärts gelegenen Ende des Überlaufrohrs 7 ist im Bereich des Ventilverschlussglieds 1 ein Ringfortsatz 15 vorgesehen, der in dem Ablaufrohr 3 geführt ist.
Insgesamt ergibt sich eine sehr einfache Herstellung der Ventildichtungsanordnung, da das Überlaufrohr 7 mit dem Ventilverschlussglied 1, dem Ringfortsatz 15 und den die Ringnut bildenden Scheiben 12, 13 einstückig im Spritzgießverfahren erfolgen kann.
In der Schließstellung des Ventils liegt das ringförmige Dichtelement 2 umlaufend auf der Dichtkante 32 auf. Aus der Figur 1 wird deutlich, dass sich das Dichtelement aufgrund des Eigengewichts der Ventilanordnung und der auf dieser lastenden Wassermenge durchbiegt.
Das vorstehend beschriebene Spülkastenablaufventil hat folgende Funktionsweise:

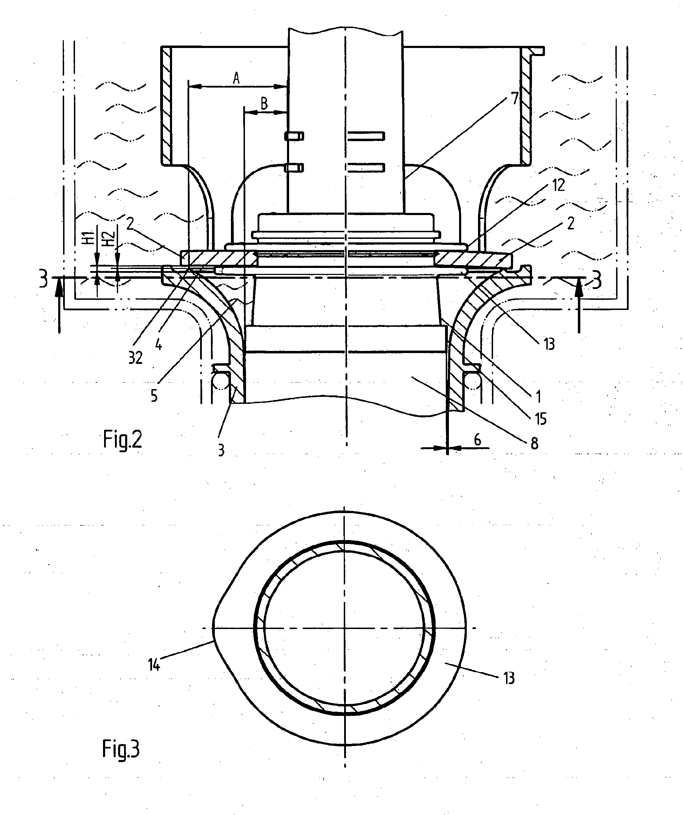

Figur 2 zeigt das Ablaufventil in einer Stellung, in welcher dieses gegenüber der Schließstellung um eine Höhe H1 angehoben worden ist. Auf der rechten Bildseite liegt das Dichtelement 2 immer noch auf der umlaufenden Dichtkante 32, die auch den Ventilsitz bildet, abdichtend auf, so dass ein Wasserdurchtritt vom Spülkasten in die Auslassöffnung 8 verhindert ist.
Auf der linken Bildseite, auf der die untere Scheibe 13 ein auskragendes Element 14, beispielsweise in Form eines Kreissegments oder eines Stabes aufweist, wird das Dichtelement 2 schon bereichsweise an von der Dichtkante 32 abgehoben, so dass das Wasser in diesem Bereich durch einen zwischen Dichtelement 2 und Dichtkante 32 gebildeten Kanal 4 in die Auslassöffnung 8 austritt. Im Bereich des auskragenden Elements 14 weist der Kanal 4 eine ungefähre Höhe H2 auf. Das durch den Kanal 4 abfließende Wasser sammelt sich zunächst in einem Druckausgleichsraum 5, da der Gesamtströmungsquerschnitt des gebildeten Kanals 4 größer ist als der des Ringspalts 6, der beim Abheben des Ventils zwischen der Innenwand des Ablaufrohrs 3 und dem Ringfortsatz 15 des Ventilverschlussglieds 1 entsteht. Dadurch steht in dem Druckausgleichsraum 5 ebenfalls hydrostatischer Wasserdruck an, so dass eine Kraft von unten auf das Dichtelement entgegen der Gewichtskraft des Wassers von oben wirkt und somit die Kraft um das Dichtelement 2 von der Dichtkante 32 bzw. dem Ventilsitz zu lösen und die volle Öffnung des Ablaufventils zu erwirken verringert wird.

In Figur 3 ist ein Schnitt durch das Ventilverschlussglied und somit eine Ansicht der unteren Scheibe 13 von unten dargestellt. Im vorliegenden Fall weist die Scheibe 13 nur ein auskragendes Element 14 in Form einer kreissegmentartigen Auswölbung auf. Weiterhin können jedoch auch andersartig geformte Elemente bzw., auch mehrere auskragende Elemente 14 an der Scheibe 13 angeformt sein.

Wird vom Benutzer die Steuerung für die Ventildichtungsanordnung betätigt, verbleibt das Dichtelement 2 zunächst an dem Ventilsitz bzw., der Dichtkante 32 und wird nur im Bereich des auskragenden Elements 14 der unteren Scheibe von der Dichtkante 32 abgelöst. Dadurch wird ein Kanal 4 freigegeben, wodurch sich auf der gegenüberliegenden Seite des Dichtelements 2, verursacht durch den kleineren Durchströmungsquerschnitt des Ringspalts 6 ein Staudruck aufbaut und den weiteren Öffnungsvorgang bzw. das Lösen des Dichtelements von der Dichtkante 32 unterstützt, so dass insgesamt eine geringere Betätigungskraft vom Benutzer am Öffnungsvorgang einzubringen ist.

### Bezugszeichenliste

- 1: Ventilverschlussglied
- 12: obere Scheibe
- 13: unter Scheibe
- 14: auskragendes Element
- 15: Ringfortsatz
- 2: Dichtelement
- 3: Ablaufrohr
- 32: Dichtkante
- 4: Kanal
- 5: Druckausgleichsraum
- 6: Ringspalt
- 7: Überlaufrohr
- 8: Auslassöffnung

## Patentansprüche

1. Ventildichtungsanordnung für ein Spülkastenablaufventil mit einem Ventilverschlussglied (1), das eine obere Scheibe (12), eine untere Scheibe (13) und einen Ringfortsatz (15) aufweist und an dem radial vorstehend ein ringförmiges Dichtelement (2) zwischen der oberen und der unteren Scheibe (12, 13) gehalten ist, wobei das ringförmige Dichtelement (2) in der Absperrposition des Ventils zur Anlage an eine ringförmige Dichtkante (32) eines Ablaufrohrs (3) gelangt,
**dadurch gekennzeichnet, dass**
an der unteren Scheibe (13) ein auskragendes Element (14) vorgesehen ist, das beim ersten Anheben des Ventilverschlussglieds (1) um eine Höhe (H1) das ringförmige Dichtelement (2) derart verformt, dass zwischen Dichtelement (2) und Dichtkante (32) wenigstens ein Kanal (4) freigegeben wird, dessen Gesamtströmungsquerschnitt größer als der Gesamtströmungsquerschnitt eines stromabwärts hinter dem Dichtelement (2) zwischen der Innenwand des Ablaufrohrs (3) und dem Ringfortsatz (15) des Ventilverschlussglieds (1) entstehenden Ringspalts (6) ausgebildet ist.

2. Ventildichtungsanordnung nach Anspruch 2, **dadurch gekennzeichnet, dass** das Verschlussglied (1) an einem Überlaufrohr (7) eines Spülkastenablaufventils ausgebildet und der Ringspalt (6) in einer Auslassöffnung (8) von einem Ringfortsatz (15) des Verschlussglieds (1) und einer Inneren Wand eines Ablaufrohres (3) gebildet ist.

3. Ventildichtungsanordnung nach einem der vorhergehenden Ansprüche, **dadurch gekennzeichnet, dass** das auskragende Element (14) in Form eines Kreissegments vorgesehen ist

4. Ventildichtungsanordnung nach einem der vorhergehenden Ansprüche, **dadurch gekennzeichnet, dass** mehrere auskragende Elemente (14) an der unteren Scheibe (13) angeformt sind.

5. Ventildichtungsanordnung nach einem der vorhergehenden Ansprüche, **dadurch gekennzeichnet, dass** die obere und untere Scheibe (12, 13) einstückig an das Verschlussglied (1) angeformt sind.

6. Ventildichtungsanordnung nach einem der vorhergehenden Ansprüche, **dadurch gekennzeichnet, dass** das Dichtelement aus einem Elastomer-Material mit einer Härte von 20 bis 45 Shore vorgesehen ist.

7. Ventildichtungsanordnung gemäß einem der vorhergehenden Ansprüche, **dadurch gekennzeichnet, dass** das Dichtelement aus Silikon vorgesehen ist.

## Claims

1. Valve seal arrangement for a flushing cistern outlet valve,
having a valve closure member (1), which has an upper disc (12), a lower disc (13) and an annular extension (15)
and on which, protruding radially, a ring-shaped sealing element (2) is held between the upper and lower discs (12, 13), wherein, in the shut-off position of the valve, the ring-shaped sealing element (2) comes to rest against a ring-shaped sealing edge (32) of an outlet pipe (3),
**characterised in that**
on the lower disc (13) there is provided a projecting element (14) which, on initial raising of the valve closure member (1) by a height (H1), deforms the ring-shaped sealing element (2) in such a way that at least one channel (4) is opened between the sealing element (2) and the sealing edge (32), the overall flow cross-section of which channel is greater than the overall flow cross-section of an annular gap (6) formed downstream after the sealing element (2) between the inner wall of the outlet pipe (3) and the annular extension (15) of the valve closure member (1).

2. Valve seal arrangement according to claim 2, **characterised in that** the closure member (1) is formed on an overflow pipe (7) of a flushing cistern outlet valve, and the annular gap (6) is formed in an outlet opening (8) by an annular extension (15) of the closure member (1) and an inner wall of an outlet pipe (3).

3. Valve seal arrangement according to either one of the preceding claims, **characterised in that** the projecting element (14) provided is in the shape of a segment of a circle.

4. Valve seal arrangement according to any one of the preceding claims, **characterised in that** a plurality of projecting elements (14) are formed on the lower disc (13).

5. Valve seal arrangement according to any one of the preceding claims, **characterised in that** the upper and lower discs (12, 13) are formed integrally on the closure member (1).

6. Valve seal arrangement according to any one of the preceding claims, **characterised in that** the sealing element provided is made from an elastomeric material having a hardness of from 20 to 45 Shore.

7. Valve seal arrangement according to any one of the preceding claims, **characterised in that** the sealing element provided is made from silicone.

## Revendications

1. Dispositif de joint pour une soupape de réservoir de chasse d'eau comportant un organe d'obturation de soupape (1) ayant une rondelle supérieure (12), une rondelle inférieure (13) et une couronne annulaire (15) et portant un joint annulaire (2), en saillie radialement, tenu entre la rondelle supérieure et la rondelle inférieure (12,13),
- en position de fermeture de la soupape, le joint annulaire (2) venant en appui contre une arête d'étanchéité (32), annulaire de la conduite de sortie (3),
dispositif **caractérisé en ce que**
la rondelle inférieure (13) comporte un élément en saillie (14) qui, lors du soulèvement de l'organe de fermeture de soupape (1) sur une hauteur (Hl), déforme le joint annulaire (2) pour que le joint (2) et l'arête d'étanchéité (32) libèrent au moins un canal (4) dont la section de passage totale est supérieure à la section de passage totale de l'intervalle annulaire (6) formé en aval du joint (2), entre la paroi intérieure de la conduite de sortie (3) et la couronne annulaire (15) de l'organe d'obturation de soupape (1).

2. Dispositif de joint de soupape selon la revendication 2,
**caractérisé en ce que**
l'organe d'obturation (1) est réalisé sur un tuyau de trop plein (7) d'une soupape de sortie de réservoir de chasse d'eau et l'intervalle annulaire (6) se forme dans l'orifice de sortie (8) entre la couronne annulaire (15) de l'organe d'obturation (1) et la paroi intérieure de la conduite de sortie (3).

3. Dispositif de joint de soupape selon l'une des revendications précédentes,
**caractérisé en ce que**
l'élément de saillie (14) a la forme d'un segment circulaire.

4. Dispositif de joint de soupape selon l'une des revendications précédentes,
**caractérisé en ce que**
plusieurs éléments en saillie (14) sont formés sur la rondelle inférieure (13).

5. Dispositif de joint de soupape selon l'une des revendications précédentes,
**caractérisé en ce que**
la rondelle supérieure et la rondelle inférieure (12, 13) sont réalisées en une seule pièce avec l'organe d'obturation (1).

6. Dispositif de joint de soupape selon l'une des revendications précédentes,
**caractérisé en ce que**
l'élément d'étanchéité est fabriqué en un élastomère ayant une dureté de 20-45 shore.

7. Dispositif de joint de soupape selon l'une des revendications précédentes,
**caractérisé en ce que**
le joint est en silicone.
